# EUROPÄISCHE PATENTANMELDUNG

(11) **EP 4 318 703 A1**
(43) Veröffentlichungstag der Anmeldung: **07.02.2024**
(21) Anmeldenummer: 23187172.4
(22) Anmeldetag: 24.07.2023
(51) Int. Cl.: H01M 10/052, H01M 10/0563, H01M 50/609

(54) **BATTERIEZELLE**

(30) Priorität: 03.08.2022 DE 102022208045
(71) Anmelder: VOLKSWAGEN AG, 38440 Wolfsburg (DE)
(72) Erfinder: Jamadar, Kartik, 38442 Wolfsburg (DE)

(57) **Zusammenfassung**

Die Erfindung betrifft eine Batteriezelle, insbesondere Lithium-Ionen-Batteriezelle, mit einem Zellgehäuse (1), in dem Anoden (A) sowie Kathoden (K) angeordnet sind und das mit einem flüssigen Elektrolyt (28) gefüllt ist, wobei die Anoden (A) über Anoden-Stromableiter (9) mit einem anodenseitigen Zellpol (11) verbunden sind, und die Kathoden (K) über Kathoden-Stromableiter (13) mit einem kathodenseitigen Zellpol (15) verbunden sind. Erfindungsgemäß weist das Zellgehäuse (1) zumindest eine Anodenkammer (3) und zumindest eine Kathodenkammer (5) auf. In der Anodenkammer (3) sind die Anoden (A) mitsamt Anoden-Stromableiter (9) angeordnet, während in der Kathodenkammer (5) die Kathoden (K) mitsamt Kathoden-Stromableiter (13) angeordnet sind. Die Anodenkammer (3) und die Kathodenkammer (5) sind strömungstechnisch miteinander verbunden, um im Zellbetrieb im Elektrolyt (28) eine lonenbewegung zwischen der Anodenkammer (3) und der Kathodenkammer (5) zu ermöglichen.

## Beschreibung

Die Erfindung betrifft eine Batteriezelle, insbesondere Lithium-Ionen-Batteriezelle, nach dem Oberbegriff des Anspruches 1.

Eine gattungsgemäße Batteriezelle weist ein Zellgehäuse auf, in dem ein Elektroden-/Separatorstapel angeordnet ist. Im Elektroden-/Separatorstapel sind alternierend jeweils eine Anode, ein Separator, eine Kathode sowie ein Separator übereinandergestapelt. Zudem ist das Zellgehäuse mit einem flüssigen Elektrolyt gefüllt. Die Anoden sind über Anoden-Stromableiter mit einem anodenseitigen Zellpol der Batteriezelle verbunden, während die Kathoden über Kathoden-Stromableiter mit einem kathodenseitigen Zellpol verbunden sind.

Im Stand der Technik werden Separatoren in der Zelle verwendet, um Anoden und Kathoden voneinander zu trennen, so dass es nicht zu einem Kurzschluss kommen kann. Er hilft auch beim Schutz vor Dendritenwachstum auf den Anoden. Der Separator muss mit einem Elektrolyt benetzt sein, damit die Ionen durch ihn hindurchwandern können. Die Poren im Separator müssen so beschaffen sein, dass sie das Wachstum von Dendriten verhindern und gleichzeitig den Innenwiderstand der Zelle nicht erhöhen. Der Separator trägt nicht zur Energieerzeugung bei, sondern ist vielmehr ein inaktives Material, das das Gewicht der Zelle erhöht. Die Kosten für den Separator belaufen sich auf etwa 20% der Kosten der Zelle. Es wäre daher von Vorteil, den Separator wegzulassen. In diesem Fall könnten jedoch die Anoden und die Kathoden nicht mehr in dichter Anlage gestapelt werden, wodurch sich die Energiedichte pro Volumen drastisch reduzieren würde. Es wäre daher erstrebenswert, die Elektroden in dem Stapel ohne zwischengeordnete Separatoren dicht nebeneinander zu platzieren. Dies würde die Energiedichte erhöhen und die Kosten senken, ist aber aufgrund von Sicherheitsproblemen (wegen Kurzschlussrisiko) derzeit nicht möglich.

Im Stand der Technik sind die folgenden Probleme mit dem Separator verbunden. Es muss stets gewährleistet sein, dass der Elektrolyt den Separator gründlich benetzt, um eine lonenbewegung zu gewährleisten. Zudem reduziert der Separator die Energiedichte pro Masse, da der Separator nichts zur Energiegewinnung beiträgt. Für jedes Elektrodenpaar sind zwei Separatorlagen erforderlich, wodurch sich die Energiedichte pro Volumen in der Zelle reduziert. Ferner belaufen sich die Kosten für den Einsatz des Separators auf bis zu 20 % der Kosten aller Zellkomponenten. Der Separator wird bei etwa 80°C weich und unterliegt einer Schrumpfung. Daher steigt die Kurzschlussgefahr bei Temperaturen über 80°C, obwohl die aktiven Materialien viel höheren Temperaturen standhalten können. Der Separator bietet außerdem keinen großen Schutz gegen mechanischen Missbrauch (Eindringen von Nägeln).

Aus der US 11 276 852 B2 ist eine Lithium-Ionen-Batteriezelle bekannt, die eine elastisch nachgiebige Anodenschutzschicht aufweist. Aus der US 4 840 857 A1 ist eine weitere Lithium-Ionen-Batteriezelle bekannt.

Die Aufgabe der Erfindung besteht darin, eine Batteriezelle bereitzustellen, die eine im Vergleich zum Stand der Technik gesteigerte Energiedichte aufweist sowie kostengünstiger herstellbar ist.

Die Aufgabe ist durch die Merkmale des Anspruches 1 gelöst. Bevorzugte Weiterbildungen der Erfindung sind in den Unteransprüchen offenbart.

Die Erfindung geht von einer Batteriezelle, insbesondere Lithium-Ionen-Batteriezelle, mit einem Zellgehäuse aus, in dem Anoden und Kathoden angeordnet sind. Das Zellgehäuse ist mit einem flüssigen Elektrolyt gefüllt. Die Anoden sind über Anoden-Stromableiter mit einem anodenseitigen Zellpol verbunden, während die Kathoden über Kathoden-Stromableiter mit einem kathodenseitigen Zellpol verbunden sind. Gemäß dem kennzeichnenden Teil des Anspruches 1 weist das Zellgehäuse zumindest eine Anodenkammer und zumindest eine Kathodenkammer auf. In der Anodenkammer sind die Anoden mitsamt Anoden-Stromableiter angeordnet, während in der Kathodenkammer die Kathoden mitsamt Kathoden-Stromableiter angeordnet sind. Die Anodenkammer und die Kathodenkammer sind zudem strömungstechnisch miteinander verbunden, um im Zellbetrieb im Elektrolyt eine lonenbewegung zwischen der Anodenkammer und der Kathodenkammer zu ermöglichen.

Die Erfindung beruht auf dem folgenden Gesichtspunkt: Normalerweise ist die lonenbeweglichkeit im Elektrolyt sehr hoch; jedoch erhöht sich der Widerstand, sobald die Ionen den Separator oder das aktive Material der Elektroden passieren. Das heißt, selbst wenn der Weg der lonenbewegung im Elektrolyt größer wäre, würde dies den lonenwiderstand nicht drastisch erhöhen. Sobald die Ionen die Oberfläche des aktiven Materials erreichen und dann in die Kristalle des aktiven Materials wandern, ist der Widerstand dort am höchsten. Kurz gesagt ist also im Stand der Technik die Größe/Beschaffenheit des aktiven Materials sowie des Separators für den lonenwiderstand verantwortlich und nicht der zurückgelegte Weg der Ionen im Elektrolyt.

Der lonenweg im Elektrolyt erhöht also nicht nennenswert den Innenwiderstand. Vielmehr ist im Stand der Technik der lonenweg im aktiven Material sowie im Separator der Hauptgrund für den Anstieg des lonenwiderstands und damit des Innenwiderstands in der Zelle. Es können daher in der Batteriezelle längere lonenwege durch den Elektrolyt bereitgestellt werden, ohne den Innenwiderstand nennenswert zu erhöhen. Gegenwärtig sind die Zellen dicht nebeneinander gestapelt. Selbst wenn diese mit etwas Abstand gestapelt würden, würde sich daher der Innenwiderstand in der Zelle nicht nennenswert erhöhen. Diese Vorgehensweise wird derzeit nicht verfolgt, da Stapel mit hoher Packungsdichte angestrebt werden, um eine hohe Energiedichte pro Volumen zu erhalten.

In Abkehr von der obigen Vorgehensweise wird erfindungsgemäß eine hohe Energiedichte pro Volumen für eine Zelle ohne die Verwendung von Separatoren erzielt. Zudem fällt das Kurzschlussrisiko weg und kann - im Vergleich zum Stand der Technik - ein Anstieg des Innenwiderstands vermieden werden.

Die Erfindung weist die folgenden Aspekte auf: Da zwischen Anoden und Kathoden keine Separatoren vorhanden sind, können Anoden und Kathoden nicht unmittelbar benachbart angeordnet sein, sondern befinden sich diese in voneinander getrennten Kammern. Das Zellgehäuse weist eine Anodenkammer auf, die von einem nicht porösen Gehäuse aus Kunststoff umschlossen ist. Zudem weist das Zellgehäuse zum Beispiel zwei Kathodenkammern auf, die die Anodenkammer seitlich begrenzen.

Da die Kathoden normalerweise 2/3 der spezifischen Kapazität der Anoden aufweisen, ist es sinnvoll, eine größere Kathodenkammer zu haben. Auf diese Weise kann die spezifische Kapazität von Anoden- und Kathodenkammern nahezu ausgeglichen werden. Es ist zudem eine Elektrolytbrücke (das heißt eine strömungstechnische Verbindung) bereitgestellt, die die Anoden- und Kathodenkammern miteinander verbindet. Die Elektrolytbrücke kann als ein externe Elektrolytleitungssystem realisiert sein, das sich außerhalb der Zelle befindet. In diesem Fall können sich die positiven Lithium-Ionen - wie auch die Elektronen - außerhalb der Zelle bewegen. Der in der Zelle befindliche Elektrolyt kann durch eine externe Pumpe unter konstantem Druck gehalten werden, so dass ein geringer Elektrolytverlust ausgeglichen wird.

In einer ersten Ausführungsvariante können das Zellgehäuse sowie die Gehäusetrennwände zwischen den Anoden- und Kathodenkammern nicht fluiddurchlässig sein, das heißt nicht porös sein. Das Zellgehäuse ist zudem stabil gegenüber einem Aufquellen der Elektroden. Sowohl in der Kathoden- als auch in der Anodenkammer sind Stromableiter positioniert. Die Bereitstellung mehrerer Strom-Ableiter sorgt für eine schnellere Stromübertragung in der Anoden- und Kathodenkammer. Das in der Zelle entstehende Gas kann durch eine gasdurchlässige Membran, die in der Elektrolytbrücke eingebaut ist, aus der Zelle abgeleitet werden.

Die Anoden sowie die Kathoden können in hoher Packagedichte in der Anodenkammer sowie in der Kathodenkammer gestapelt sein. Beide Kammern sind voneinander getrennt. Die Elektrolytbrücke ermöglicht die lonenbewegung zwischen den beiden Kammern.

Der in der Anodenkammer befindliche Anodenstapel kann bevorzugt etwa 15-20 % größer sein als der in der Kathodenkammer befindliche Kathodenstapel. Bei einem Zellgehäuse mit zwei seitlichen Kathodenkammern und einer mittigen Anodenkammer ist daher die Kathodenmasse in beiden seitlichen Kathodenkammern größer als die Anodenmasse in der mittigen Anodenkammer. Die spezifische Kapazität der Anoden ist üblicherweise um etwa 15-20 % größer als spezifische Kapazität der Kathoden in den beiden Kathodenkammern.

Der Anoden-Stromableiter kann beispielsweise ein Kupfer-Nickel-Stromableiter sein. Dieser kann mit dem jeweiligen Kupfersubstrat der Anoden verbunden sein. Das Kupfersubstrat ist mit einem Anodenaktivmaterial beschichtet. Auf der Kathodenseite kann der Kathoden-Stromableiter aus Aluminium gefertigt sein und mit dem jeweiligen Aluminiumsubstrat der Kathoden verbunden sein. Das Aluminiumsubstrat ist mit dem Kathodenaktivmaterial beschichtet. Das Zellgehäuse kann beispielhaft aus Kunststoff oder aus Aluminium gefertigt sein.

Das formstabile Zellgehäuse bietet außerdem ausreichend Schutz gegen das Eindringen von Nägeln und Dendriten. Zwischen den Anoden- und Kathodenkammern fließt ein Elektrolyt. Dies kann entweder durch eine Elektrolytbrücke oder durch Löcher/Porosität in einer Gehäusetrennwand zwischen Anodenkammer und Kathodenkammer erzielt werden.

Wie bereits oben erwähnt, sind die Anoden- und Kathodensubstrate der Anoden und der Kathoden jeweils mit einem Anoden-Stromableiter und mit einem Kathoden-Stromableiter verbunden, die in der Anodenkammer beziehungsweise in der Kathodenkammer angeordnet sind. Der Anoden-Stromableiter und der Kathoden-Stromableiter sind jeweils mit einem an der Zellgehäuse-Außenseite angeordneten positiven und negative Zellpol verbunden. Die Kathoden weisen normalerweise eine geringere spezifische Kapazität als die Anoden. Daher ist bevorzugt die Kathoden-Masse etwa 2-3 mal größer als die Anoden-Masse.

Es gibt eine Grenze für die maximale Kalandrierung der Kathoden. Das heißt, sofern sich für eine höhere Kapazität der Anoden entschieden wird (zum Beispiel Silizium + Graphit), wird die Masse der Kathoden auf eine größere Menge erhöht. In diesem Fall ist die Kathodenkammer größer als die Anodenkammer. In einer alternativen Ausführungsvariante kann auch direkt Lithiummetall als Anode verwenden werden. Lithium-Metall weist eine 20-mal höhere Kapazität hat als die Kathode auf. Das bedeutet, dass die Kathodenkammer mindestens 10-mal größer ausgelegt sein muss als die Anodenkammer. Wenn Lithium-Metall als Anode verwendet wird, sollte es auf der einen Seite mit einem Stromableiter verbunden sein, während die andere Seite frei ist, um Ionen aufzunehmen.

Mit der Erfindung ist die Verwendung einer Lithium-Metall-Anode ermöglicht, da keine Gefahr besteht, dass Dendriten in den Separator eindringen und einen Kurzschluss mit den Kathoden verursachen.

Nachfolgend sind die Vorteile der Erfindung nochmals wie folgt zusammengefasst: Zwischen Kathoden und Anoden sind keine Separatoren erforderlich. Dies bedeutet, dass die Energiedichte steigt. Die Kosten für die Zelle werden gesenkt, da die teuren Separatoren für die Zellkomponenten wegfallen. Da sich Anoden und Kathoden in unterschiedlichen Kammern befinden, besteht keine Gefahr eines Kurzschlusses innerhalb der Zelle. Da kein Separator benetzt werden muss, kann der Elektrolyt schneller in die Zelle gefüllt werden, und der Widerstands kann aufgrund weggelassener Separatoren ebenfalls reduziert werden. Unterschiedliche Kombinationen von negativer (Anode) und positiver (Kathode) Kapazität sind durch unterschiedliche Elektroden (oder Massen) von Kathode und Anode möglich. Der Elektrolyt im Inneren der Zelle wird durch einen externen Kreislauf konstant gehalten. Das in der Zelle entstehende Gas kann abgeführt werden. Dies verhindert ein Aufquellen der Zelle und eine Verringerung der lonenmobilität. An Anoden und Kathoden sind mehrere Stromableiter anschließbar, wodurch mehr Strom übertragen werden kann. Eine Elektrolytbrücke ist nur erforderlich, wenn Anoden- und Kathodenkammer vollständig voneinander getrennt sind. Ansonsten reicht es für die lonenbewegung aus, den Elektrolyts in die Zelle zu füllen und das innere Gehäuse porös zu halten, um die Bewegung des Elektrolyts zwischen Kathoden- und Anodenkammer zu ermöglichen. Die Elektroden können mit hoher Packagedichte platziert werden und es können auch mehrere Stapel im Zellgehäuse untergebracht werden. Dies erhöht die Kapazität der Zelle. Die Zelle ist leicht herzustellen, da der Stapelungsprozess viel einfacher ist, da keine Anoden-Separator-Kathoden-Separator-Stapel gebildet werden müssen, sondern lediglich voneinander separate Anodenstapel und Kathodenstapel gestapelt werden müssen. Die Verwendung von Lithiummetall als Anode ist möglich, und zwar in Kombination mit flüssigem Elektrolyt. Das Problem der Lithium-Dendriten und des isolierten Lithiums stellt bei diesem neuen Zellkonzept kein Problem dar. Die Kühlung der Zelle durch Elektrolytübertragung ist möglich. Dies ermöglicht eine aktive Kühlung der Zelle. Die Zelle kann bei einer Temperatur von mehr als 80°C arbeiten, da keine Gefahr der Erweichung des Separators besteht. Die Infektionszelle kann immer bei einer normalen Temperatur von ca. 50°C arbeiten (wenn sich der Elektrolyt nicht zersetzt), da dies die lonenmobilität erhöht und die Viskosität des Elektrolyts verringert. Daher wird der erhöhte lonenwiderstand aufgrund des höheren lonenwegs durch die erhöhte lonenmobilität aufgrund der höheren Temperatur ausgeglichen.

Nachfolgend sind die wesentlichen Erfindungsaspekte nochmals im Einzelnen hervorgehoben: So können die Anoden in der Anodenkammer mit hoher Packagedichte zu einem Anodenstapel ohne zwischengeordneten Separatoren gestapelt sein. In gleicher Weise können auch die Kathoden in der Kathodenkammer zu einem Kathodenstapel ohne zwischengeordneten Separatoren gestapelt sein.

In einer ersten Ausführungsvariante können die Anodenkammer und die Kathodenkammer über ein außerhalb des Zellgehäuses verlegtes Elektrolytleitungssystem miteinander strömungstechnisch verbunden sein.

In einer weiteren technischen Umsetzung kann der Batteriezelle ein Elektrolytversorgungssystem zugeordnet sein, das ein Elektrolytreservoir und eine Versorgungspumpe aufweist. In einem Füllvorgang wird ein Neu-Elektrolyt aus dem Elektrolytreservoir mithilfe der Versorgungspumpe in das Zellgehäuse eingespeist. Der Füllvorgang wird zum Beispiel gestartet, wenn der Druck innerhalb des Zellgehäuses unter einen Schwellwert fällt.

Das Elektrolytleitungssystem kann zumindest eine gasdurchlässige Membran aufweisen. Über die Membran kann Gas, das sich während des Zellbetriebs im Zellgehäuseinneren entwickelt, entfernt werden.

In einer ersten Ausführungsvariante können die Anodenkammer und die Kathodenkammer über eine Gehäusetrennwand voneinander getrennt sein. Die Gehäusetrennwand kann fluiddicht, das heißt für den Elektrolyt undurchlässig, ausgebildet sein. Alternativ dazu kann die Gehäusetrennwand zumindest einen Elektrolytdurchlass aufweisen, um eine strömungstechnische Verbindung zwischen den beiden Kammern herzustellen, wodurch im Zellbetrieb eine lonenbewegung zwischen der Anodenkammer und der Kathodenkammer ermöglicht ist.

Nachfolgend sind Ausführungsbeispiele der Erfindung anhand der beigefügten Figuren beschrieben.

Es zeigen:

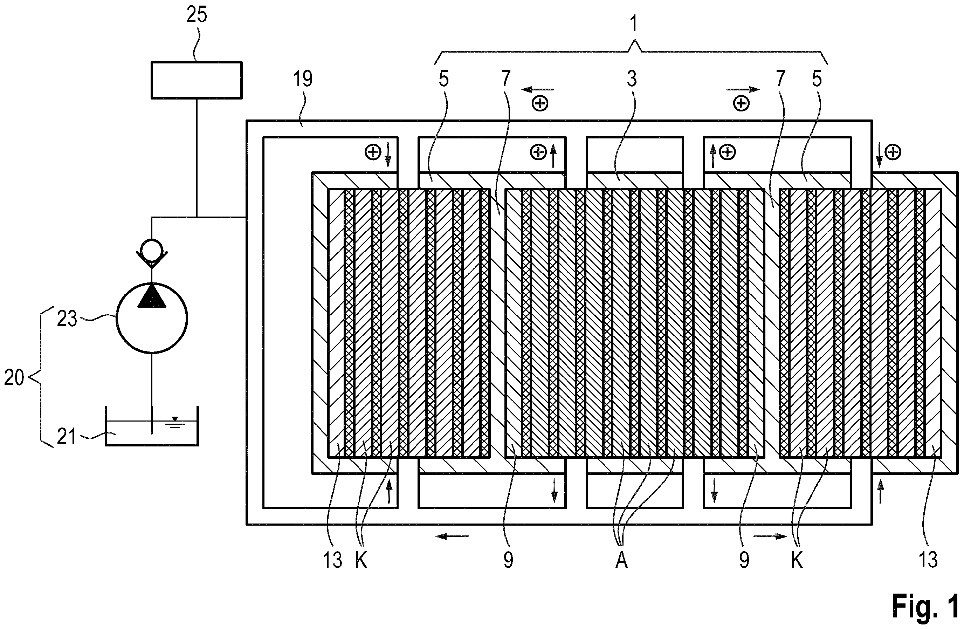

- Figuren 1 bis 7: unterschiedliche Ausführungsvarianten der Batteriezelle.

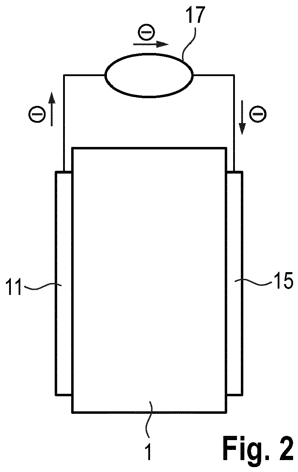

In der Figur 1 ist eine Lithium-Ionen-Batteriezelle mit einem Zellgehäuse 1 gezeigt. Das Zellgehäuse 1 ist in eine mittlere Anodenkammer 3 sowie in zwei seitliche Kathodenkammern 5 unterteilt, die über Gehäusetrennwände 7 voneinander fluiddicht abgetrennt sind. In der mittleren Anodenkammer 3 sind Anoden A dicht zu einem Anodenstapel ohne zwischengeordneten Separatoren gestapelt. In gleicher Weise sind in den beiden Kathodenkammern 5 Kathoden K ohne zwischengeordneten Separatoren zu einem Kathodenstapel gestapelt. In der mittleren Anodenkammer 3 sind die Anoden A an Anoden-Stromableitern 9 elektrisch angebunden. Dieser sind wiederum mit einem anodenseitigen Zellpol 11 (Figur 2) an der Außenseite des Zellgehäuses 1 verbunden. In gleicher Weise sind in den beiden Kathodenkammern 5 Kathoden-Stromableiter 13 angeordnet, die mit einem an der Außenseite des Zellgehäuses 1 befindlichen kathodenseitigen Zellpol 15 (Figur 2) verbunden sind.

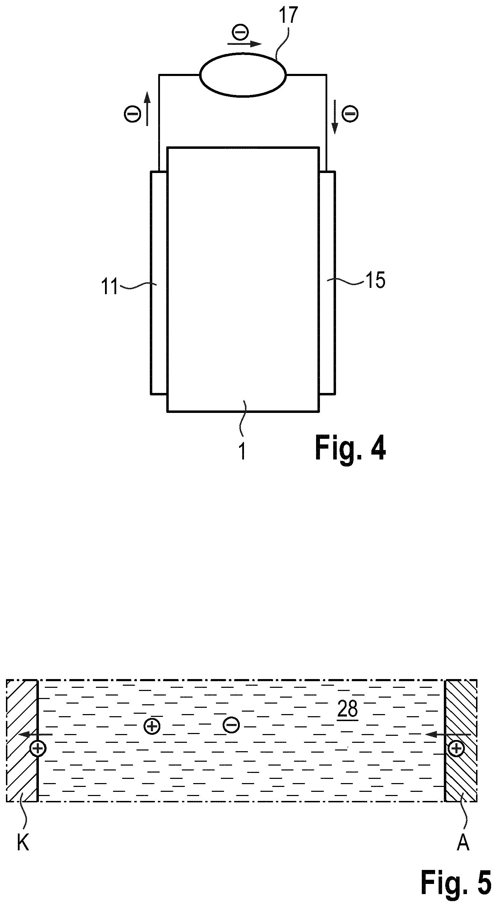

In der Figur 2 ist beispielhaft die Batteriezelle in einem Entladestromkreis eingebunden, in dem ein elektrischer Verbraucher 17 geschaltet ist. Der Batteriezelle ist zudem ein Elektrolytleitungssystem 19 zugeordnet, das außerhalb des Zellgehäuses 1 verlegt ist. Deren Elektrolytleitungen verbinden die Kathodenkammern 5 strömungstechnisch mit der Anodenkammer 3. Auf diese Weise ist im Lade- oder Entladebetrieb der Zelle im Elektrolyt 28 (nur in der Figur 5 gezeigt) eine lonenbewegung zwischen der Anodenkammer 3 und den beiden Kathodenkammern 5 ermöglicht. An das Elektrolytleitungssystem 19 ist ein Elektrolytversorgungssystem 20 angeschlossen, das ein Elektrolytreservoir 21 sowie eine Versorgungspumpe 23 aufweist. Bei einem Füllvorgang kann ein Neu-Elektrolyt aus dem Elektrolytreservoir 21 in das Elektrolytleitungssystem 19 eingespeist werden. Ein solcher Füllvorgang startet zum Beispiel, sofern der sensorisch erfasste Druck innerhalb des Zellgehäuses 1 unter einen Schwellwert fällt.

Das Elektrolytleitungssystem 19 weist zudem eine gasdurchlässige Membran 25 auf. Über die Membran 25 kann Gas, das sich während des Zellbetriebs im Zellgehäuseinneren beziehungsweise im Elektrolytleitungssystem 19 entwickelt, nach außen entfernt werden.

Wie bereits oben erwähnt, ist in der Figur 2 ein Entladevorgang angedeutet, bei dem der anodenseitige Zellpol 11 und der kathodenseitige Zellpol 15 an einem Entladestromkreis mit zwischengeschaltetem elektrischen Verbraucher 17 angeschlossen sind. Beim Entladevorgang werden die in den Anoden A eingelagerten Lithium-Ionen über das Elektrolytleitungssystem 19 in Richtung der in den Kathodenkammern 5 befindlichen Kathoden K bewegt und dort eingelagert. Auf diese Weise wird ein Stromfluss erzeugt, mit dem der Verbraucher 17 angetrieben wird.

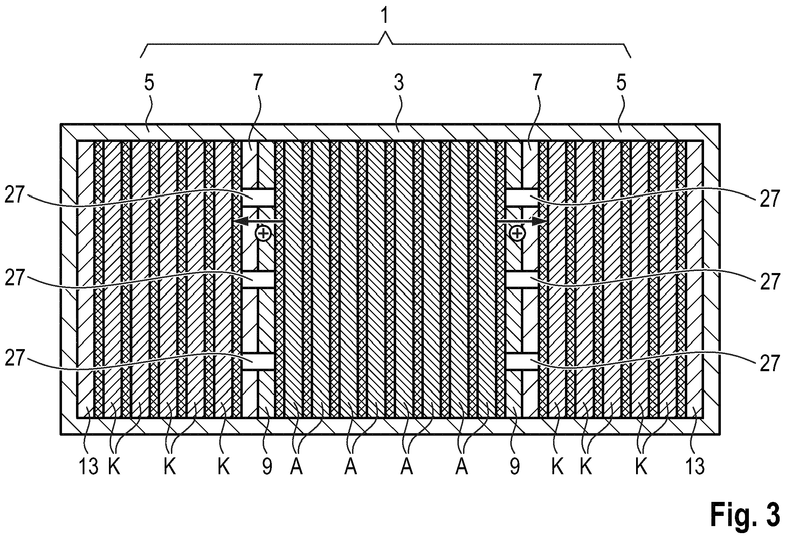

In den Figuren 3 und 4 ist eine Batteriezelle gemäß einem zweiten Ausführungsbeispiel gezeigt. Deren Aufbau sowie Funktionsweise ist im Wesentlichen identisch mit der in den Figuren 1 und 2 gezeigten Batteriezelle. Im Unterschied zum ersten Ausführungsbeispiel ist in der Figur 3 die strömungstechnische Verbindung zwischen der Anodenkammer 3 und den beiden Kathodenkammern 5 nicht über ein externes Elektrolytleitungssystem 20 bereitgestellt. Vielmehr sind in der Figur 3 die Gehäusetrennwände 7 zwischen den Kammern 3, 5 mit Elektrolytdurchlässen 27 versehen. Auf diese Weise wird im Zellbetrieb eine lonenbewegung zwischen den Kammern 3, 5 ermöglicht.

In der Figur 5 ist in einer schematischen Darstellung eine lonenbewegung von Lithium-Ionen im Elektrolyt 28 angedeutet. Demnach bewegen sich die positiven Lithium-Ionen zwischen der Kathode K und der Anode A und erzeugen so einen lonenstrom. Der Elektrolyt 28 enthält Lithiumsalz, das durch das Lösungsmittel in die positiven Lithium-Ionen und in negative Anionen gespalten wird. Sobald sich die positiven Lithium-Ionen zur Kathode K bewegen, wandern weitere Lithium-Ionen von der Anode A in den Elektrolyt 28, um die neutrale Ladung im Elektrolyt 28 zu erhalten. Es ist also nicht so, dass die Lithium-Ionen eine große Strecke zurücklegen müssen. Die Lithium-Ionen bewegen sich vielmehr in ähnlicher Weise wie die Elektronen in einer Reihe hintereinander (wie beim Perlenketteneffekt), wobei die positiven und negativen Ladungen im Elektrolyt 28 stets ausgeglichen sind.

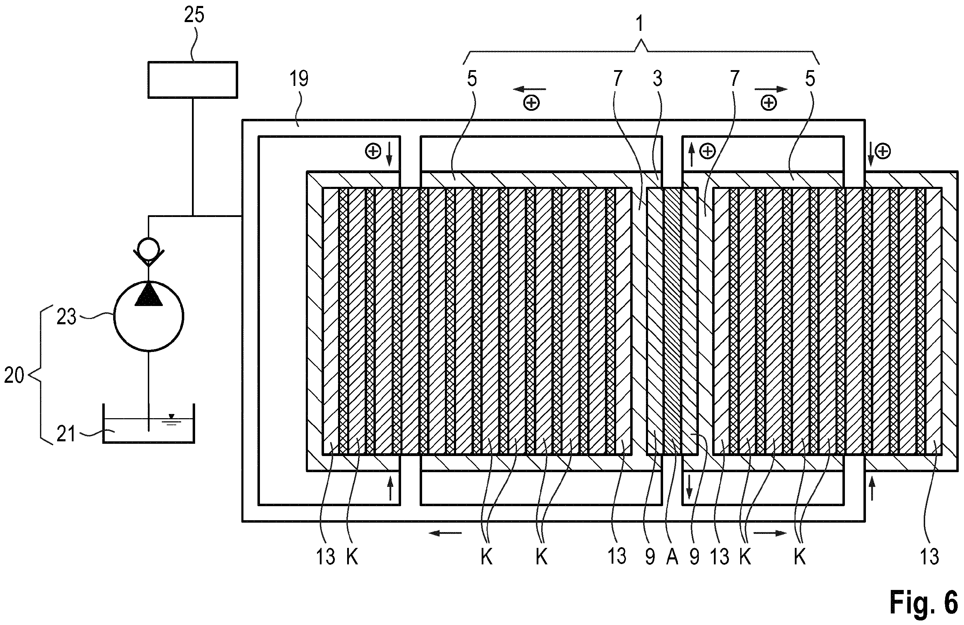

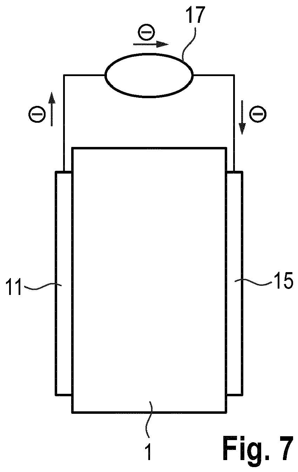

Das Ausführungsbeispiel der Figuren 6 und 7 entspricht im Wesentlichen dem ersten Ausführungsbeispiel der Figuren 1 und 2. Im Unterschied zum ersten Ausführungsbeispiel besteht in der Figur 6 die Anode A aus Lithiummetall. Die Anode A weist eine Kapazität von ca. 4000 Ah/kg auf, so dass eine dünne Lithiumfolie ausreichend ist, um eine Batteriezelle mit hoher Kapazität zu erhalten. Die als Lithium-Metallfolie ausgebildete Anode A ist mit einem Anoden-Stromableiter 9 (das heißt ein Kupfer-Nickel-Stromableiter) verbunden. Beispielhaft kann der Anoden-Stromableiter 9 durch Federkraft mit der Lithium-Metall-Folie verspannt. Die Kathoden K bestehen aus Kathodenaktivmaterial, das auf einem Aluminiumsubstrat beschichtet ist. Die Masse der Kathoden K ist etwa 20-mal so groß wie die der Lithium-Metall-Folie, um die gleiche Kapazität wie die Anode A zu erreichen.

Die Verwendung von Lithiummetall hat den Vorteil, dass es keine Probleme mit Lithium-Dendriten und isolierten Partikeln gibt. Selbst wenn sich Dendriten und isoliertes Lithium bilden, bleiben sie in der Anodenkammer. Jedoch besteht insoweit ein Nachteil, als eine Kathodenmasse erforderlich ist, die etwa 20 Mal größer als die Anodenmasse ist. Dies verursacht ein höheres Gewicht und daher höhere Kosten. Zweifellos kann jedoch eine hohe Kapazität erreicht werden. Wenn zum Beispiel 100 g Lithium für die Anode A bereitgestellt wird, kann eine Kapazität von 400 Ah erreicht werden. Um die gleiche Kapazität auf der Kathodenseite zu erhalten, braucht man etwa 2 kg NMC-Partikel.

Wie oben erwähnt, ist der Anoden-Stromableiter 9 mittels Federkraft mit der Lithium-Metall-Folie verspannt. Hierbei besteht folgende Problematik: Während des Ladevorgangs kann Lithiummetall verbraucht werden und dann nicht mehr genug Lithiummetall für den Kontakt mit dem Anoden-Stromableiter 9 vorhanden sein. Daher sollte in der Anode A stets überschüssiges Lithium in Form von Lithiummetall vorhanden sein. Dies macht die Zelle teuer, da das Lithium im Überschuss vorhanden sein muss.

### Bezugszeichenliste

- 1: Zellgehäuse
- 3: Anodenkammer
- 5: Kathodenkammer
- 7: Gehäusetrennwände
- 9: Anoden-Stromableiter
- 11: Anoden-Zellpol
- 13: Kathoden-Stromableiter
- 15: Kathoden-Zellpol
- 17: elektrischer Verbraucher
- 19: Elektrolytleitungssystem
- 20: Elektrolytversorgungssystem
- 21: Elektrolytreservoir
- 23: Versorgungspumpe
- 25: gasdurchlässige Membran
- 27: Elektrolytdurchlass
- 28: Elektrolyt
- A: Anode
- K: Kathode

## Patentansprüche

1. Batteriezelle, insbesondere Lithium-Ionen-Batteriezelle, mit einem Zellgehäuse (1), in dem Anoden (A) sowie Kathoden (K) angeordnet sind und das mit einem flüssigen Elektrolyt (28) gefüllt ist, wobei die Anoden (A) über Anoden-Stromableiter (9) mit einem anodenseitigen Zellpol (11) verbunden sind, und die Kathoden (K) über Kathoden-Stromableiter (13) mit einem kathodenseitigen Zellpol (15) verbunden sind, **dadurch gekennzeichnet, dass** das Zellgehäuse (1) zumindest eine Anodenkammer (3) und zumindest eine Kathodenkammer (5) aufweist, dass in der Anodenkammer (3) die Anoden (A) mitsamt Anoden-Stromableiter (9) angeordnet sind, und in der Kathodenkammer (5) die Kathoden (K) mitsamt Kathoden-Stromableiter (13) angeordnet sind, und dass die Anodenkammer (3) und die Kathodenkammer (5) strömungstechnisch miteinander verbunden sind, um im Zellbetrieb im Elektrolyt (28) eine lonenbewegung zwischen der Anodenkammer (3) und der Kathodenkammer (5) zu ermöglichen.

2. Batteriezelle nach Anspruch 1, **dadurch gekennzeichnet, dass** die Anoden (A) in der Anodenkammer (3) zu einem Anodenstapel ohne zwischengeordneten Separatoren gestapelt sind, und/oder dass die Kathoden (K) in der Kathodenkammer (5) zu einem Kathodenstapel ohne zwischengeordneten Separatoren gestapelt sind.

3. Batteriezelle nach Anspruch 1 oder Anspruch 2, **dadurch gekennzeichnet, dass** die Anodenkammer (3) und die Kathodenkammer (5) über ein außerhalb des Zellgehäuses (1) verlegtes Elektrolytleitungssystem (19) miteinander strömungstechnisch verbunden sind.

4. Batteriezelle nach einem der Ansprüche 1 bis 3, **dadurch gekennzeichnet, dass** der Batteriezelle ein Elektrolytversorgungssystem (20) zugeordnet ist, das ein Elektrolytreservoir (21) und eine Versorgungspumpe (23) aufweist, dass insbesondere in einem Füllvorgang ein Neu-Elektrolyt aus dem Elektrolytreservoir (21) in das Zellgehäuse (1) eingespeist wird, und dass insbesondere der Füllvorgang startet, sofern der Druck innerhalb des Zellgehäuses (1) unter einem Schwellwert fällt.

5. Batteriezelle nach Anspruch 3 oder Anspruch 4, **dadurch gekennzeichnet, dass** das Elektrolytleitungssystem (19) zumindest eine gasdurchlässige Membran (25) aufweist, und dass über die Membran (25) Gas, das sich während des Zellbetriebs im Zellgehäuseinneren entwickelt, entfernbar ist.

6. Batteriezelle nach einem der vorhergehenden Ansprüche, **dadurch gekennzeichnet, dass** die Anodenkammer (3) und die Kathodenkammer (5) über eine Gehäusetrennwand (7) voneinander getrennt sind, und dass insbesondere die Gehäusetrennwand (7) fluiddicht ist, das heißt für den Elektrolyt (28) undurchlässig ist, oder dass die Gehäusetrennwand (7) zumindest einen Elektrolytdurchlass (27) aufweist, um eine lonenbewegung zwischen der Anodenkammer (3) und der Kathodenkammer (5) zu ermöglichen.
